# EUROPÄISCHE PATENTANMELDUNG

(11) **EP 2 154 111 A1**
(43) Veröffentlichungstag der Anmeldung: **17.02.2010**
(21) Anmeldenummer: 08012465.4
(22) Anmeldetag: 10.07.2008
(51) Int. Cl.: C01B 33/32, C01B 37/00, C09C 1/28, C09C 1/30, C09K 3/18, C11D 3/08

(54) **Wasserlösliche Silikate und deren Verwendung**

(71) Anmelder: Cognis IP Management GmbH, 40589 Düsseldorf (DE)
(72) Erfinder: Pesch, Wolfgang, 41515 Grevenbroich (DE); Langen, Michael, 40724 Hilden (DE); Bohlander, Ralf, 40699 Erkrath (DE); Albers, Thomas, 40597 Düsseldorf (DE)

(57) **Zusammenfassung**

Beschrieben werden modifizierte Silikate, die durch Reaktion einer Wasserglaslösung mit Alkylsilanen der allgemeinen Formel R-(CH₂)ₙ-Si-(X)₃ in der X jeweils unabhängig voneinander für einen Rest CH₃, OCH₃, OC₂H₅, OC₃H₇, OCOCH₃ oder Cl steht und R für einen gesättigten oder ungesättigten, linearen oder verzweigten bzw. ringförmigen Rest mit mindestens einem O und/oder N-Atom und mindestens 2 C-Atomen steht, und n eine Zahl zwischen 1 und 3 bedeutet, bei Temperaturen von 20 bis 80 °C erhalten werden. Die modifizierten Silikate eignen sich zur hydrophilen Ausrüstung von harten Oberflächen, und können in Wasch- und Reinigungsmitteln eingesetzt werden.

## Beschreibung

Die vorliegende Erfindung betrifft modifizierte wasserlösliche Silikate und deren Verwendung in Reinigungsmitteln.

Das Reinigen von Substraten, d. h. sowohl von harten Oberflächen als auch von Textilien hat sowohl im Haushalt als auch im gewerblichen Bereich eine große Bedeutung. Zum einen haben die Wasch- oder Reinigungsverfahren hygienische Gründe, vielfach sind es auch ästhetische Grunde. Die ästhetischen Gründe sind insbesondere bei lichtdurchlässigen oder glatten Oberflächen von Bedeutung. So verlieren "angestaubte" Gläser einschließlich Fensterscheiben und auch Oberflächen aus Porzellan zumindest teilweise ihren Glanz.

Auf dem Gebiet der Reinigungsmittel für harte Oberflächen, wie Allzweckreiniger, Glasreiniger, Geschirrspülmittel und WC-Reiniger, sind Systeme bekannt, die neben der Reinigungswirkung auch einen Wasser- und/oder Schmutz abweisenden Effekt auf der behandelte Oberfläche erzeugen. In der Regel enthalten die bekannten Mittel langkettige, organische Alkylsulfonate, -phosphate, -carboxylate oder organische Polymerverbindungen, wobei teilweise auch Organosilanverbindungen zum Einsatz kommen. Zu diesem Zweck werden Reinigern häufig auch Acrylat-haltige Polymere zugesetzt, wie z.B. in der WO 94/26858 beschrieben. Daneben können aber auch Silikate zu diesem Zweck eingesetzt werden. Aus der WO 2005/097961 z.B. ist bekannt, dass Umsetzungsprodukte aus kolloidalen Silica Partikeln mit Tensiden geeignet sind, um harte Oberflächen Schmutz abweisend auszurüsten. Dabei wird die Oberfläche durch geeignete Mittel hydrophiler, was sich makroskopisch durch einen verkleinerten Kontaktwinkel zwischen einem Wassertropfen und der benetzten Oberfläche zeigt. Die DE 10 2004 019 022 A1 beschreibt kolloidales Silica-Sol zur Hydrophilierung von harten Oberflächen.
Es besteht aber der Bedarf nach weiter verbesserten Mittel zu hydrophilen Oberflächenausrüstung. Dabei sollte natürlich die Wirksamkeit der Ausrüstung verbessert sein, was konkret heißt, dass der Kontaktwinkel zwischen Wasser und Oberfläche weiter verkleinert wird und die Ausrüstung auch möglichst lange anhält.

Es wurde nun gefunden, dass bestimmte modifizierte lösliche Silikate die oben gestellten Anforderungen erfüllen.

Ein erster Gegenstand der vorliegenden Anmeldung ist daher auf modifizierte Silikate gerichtet, welche dadurch erhältlich sind, dass man
(a) eine wässerige Lösung von Silikaten, die der allgemeinen Formel M₂O • nSiO₂ folgen vorlegt, wobei M für ein Kation aus der Gruppe Li⁺, Na⁺, K⁺, NY₄⁺ wobei Y ein H-Atome und/oder einen Alkyl- oder Alkenylreste mit 1 bis 10 C-Atomen bedeutet, mit
(b) mindestens einer Silizium organischer Verbindung der allgemeinen Formel (I) R-(CH₂)ₙ-Si-(X)₃ (I) in der X jeweils unabhängig voneinander für einen Rest CH₃, OCH₃, OC₂H₅, OC₃H₇, OCOCH₃ oder Cl steht und R für einen gesättigten oder ungesättigten, linearen oder verzweigten bzw. ringförmigen Rest mit mindestens einem O und/oder N-Atom und mindestens 2 C-Atomen steht, und n eine Zahl zwischen 1 und 3 bedeutet, bei Temperaturen von 5 bis 100 °C zur Reaktion bringt.

Als Komponente (a) kommen hier die insbesondere die sog. Wassergläser in Frage. Wassergläser sind aus dem Schmelzfluss erstarrte, glasige, wasserlösliche Alkalisilikate (also Salze von Kieselsäuren) oder deren viskose wässerige Lösungen. Beim Wasserglas kommen typischerweise 1-4 Mol SiO₂ auf 1 Mol Alkalioxid (M₂O), weshalb z.B. Natronwasserglas und Kaliwasserglas üblicherweise auch durch das Massenverhältnis oder Molverhältnis SiO₂/Alkalioxid sowie die Dichte der wässerigen Lösung charakterisiert werden. Sie enthalten oligomere Silikatanionen mit Alkali als Gegenion (mit z.B. M = K oder Na). Besonders bevorzugte Wassergläser als Reaktionskomponente (a) sind Natrium- oder Kaliumwassergläser. Dabei sind solche Wassergläser bevorzugt, deren molares Verhältnis von SiO₂ : M₂O im Bereich von 2 bis 5 liegt und vorzugsweise im Bereich von 2,5 bis 3,5 liegt. Ganz besonders bevorzugt ist der Bereich von 2,7 bis 3,4. Die Wassergläser werden vorzugsweise als wässerige Lösung, die 15 bis 50 Gew.-% Feststoffe (gelöst) enthält verwendet, wobei Lösungen mit Gehalten von 25 bis 40 Gew.-% besonders bevorzugt sind.

Bei der Komponente (b) handelt es sich um ebenfalls bekannte Siliziumorganische Verbindungen. Zu diesen gehören vorzugsweise die Silane. Das ist zunächst eine Gruppenbezeichnung für Silizium-Wasserstoffverbindungen.
Im Rahmen der vorliegenden Erfindung werden die löslichen Silikate der Reaktionskomponente (a) allerdings nur mit solchen Silanen modifiziert, die der allgemeinen Formel (i) folgen:

R-(CH₂)ₙ-Si-(X)₃ (i)

in der X jeweils unabhängig voneinander für einen Rest CH₃, OCH₃, OC₂H₅, OC₃H₇, OCOCH₃ oder Cl steht und R für einen gesättigten oder ungesättigten, linearen oder verzweigten bzw. ringförmigen Rest mit mindestens einem O und/oder N-Atom und mindestens 2 C-Atomen steht, und n eine Zahl zwischen 1 und 3 bedeutet. Bevorzugt sind hierbei insbesondere solche Silane, die der allgemeinen Formel (ii) folgen: R-(CH₂)ₙ-Si-(CH₃)(X)₂ wobei X und n die obigen Bedeutung haben.

Geeignete Silane sind z.B. Tris-(trimethoxy)silan, Octyltriethoxysilan, Methyltriethoxysilane, Methyltrimethoxysilane; Isocyanatesilan, wie Tris-[3- (trimethoxysilyl) propyl]isocyanurat; Gammamercaptopropyltrimethoxysilan, Bis-(3- [triethoxysilyl] propyl)polysulfid, Beta-(3,4-epoxycyclohexyl)-ethyltrimethoxysilan; Epoxysilane, Glycidoxy- und/oder Glycidoxypropyl trimethoxysilan, Gamma-glycidoxypropylmethyldiethoxysilan, (3-glycidoxy-propyl)-trimethoxysilan, (3-glycidoxypropyl)hexyltrimethoxysilan, Beta-(3,4-epoxycyclohexyl)-ethyltriethoxysilan; Silane die Vinylgruppen enthalten, wie Vinyltriethoxysilan, Vinyl trimethoxysilan, Vinyltris-(2- methoxyethoxy)silan, Vinylmethyldimethoxysilan, Vinyl triisopropoxysilan; Gamma-methacryloxypropyltrimethoxysilan, Gammamethacryloxypropyl triisopropoxysilan, Gamma-methacryloxypropyltriethoxysilan, Octyltrimethyloxysilan, Ethyltrimethoxysilan, Propyltriethoxysilan, Phenyltrimethoxysilan, 3-mercaptopropyltriethoxysilan, Cyclohexyltrimethoxysilan, Cyclohexyltriethoxysilan, Dimethyldimethyoxysilan, 3-Chloropropyltriethoxysilan, 3-methacryoxypropyltrimethoxy silan, i-Butyltriethoxysilan, Trimethylethoxysilan, Phenyldimethylethoxysilan, Hexamethyldisiloxan, Trimethylsilylchlorid, Vinyltriethoxysilan, Hexamethyldisilizan, und Mischungen daraus. In der US 4,927,749 werden in der Table 2, in den Spalten 9, Zeile 10 bis Spalte 11, Zeile 23 weitere geeignete Silane offenbart, die auch um Rahmen der vorliegenden technischen Lehre Verwendung finden können. Besonders bevorzugte Silane im Sinne der vorliegenden technischen Lehre sind ausgewählt aus der Gruppe der Alkylalkoxy-Silane, vorzugsweise der Trialkoxysilane, mit Methyl,- Ethyl, Propyl- und/oder Butylresten. Weiterhin als bevorzugt zu nennen sind solche Trialkoxysilane, deren Alkylkette durch Heteroatome, wie O oder N unterbrochen werden. Bevorzugte Silane sind N-(2-aminoethyl)-3-aminopropylsilan oder 3-Aminopropyltriethoxysilan bzw. das 3-Glycidyloxypropyltrimethoxy- oder 3-Glycidyl-oxypropyltriethoxisilan. Die Siliziumorganischen Verbindungen können jeweils alleine oder als Mischung eingesetzt werden, bzw. auch deren Partialhydrolysate unter evtl. vorab Reduktion des dabei freigesetzten Alkohols.

Die modifizierten Silikate, die Gegenstand der beanspruchten Lehre sind, sind herstellbar z.B. durch Umsetzung der Komponente (a) und (b), entweder bei Raumtemperatur (20 °C), oder ggf. bei erhöhten Temperaturen bis 80 °C, wobei der Temperaturbereich von 20 bis 60 °C besonders bevorzugt sein kann. Die Auswahl der geeigneten Reaktionstemperatur ist abhängig von der Reaktivität der Silan-Komponente. Triethoxylsilane z.B. reagieren vorzugsweise bei erhöhten Temperaturen von 40 °C und höher, wobei der Bereich von 60 bis 80 °C besonders bevorzugt sein kann. Die Reaktanden werden verrührt, wobei es je nach Viskosität der Mischungen vorteilhaft sein kann, Wasser zuzugeben.

Vorzugsweise wird die Wasserglaslösung vorgelegt, und dann die Silan-Komponente (b) hinzu zugegeben.

In der US 4,927,749 werden Umsetzungsprodukte von kolloidalen Silikaten mit Silanen offenbart, und deren Verwendung zur Trennung von Blutzellen. Dabei unterscheiden sich die modifizierten Silikate der Lehre gemäß der US 4,927,749 von den erfindungsgemäßen Silikaten insbesondere darin, dass letztere als Silikat-Basis wasserlösliche Wassergläser verwenden, wohingegen in der US-Schrift die strukturell unterschiedlichen kolloidalen Silikat-Dispersionen zum Einsatz kommen.

Vorzugsweise weist das Reaktionsprodukt von a) und b) ein Gewichtsverhältnis des SiO₂ aus (a) zum SiO₂ aus (b) im Bereich von 30 bis 2 auf. Besonders bevorzugt ist ein Verhältnis von 20 bis 5. Das Verhältnis 12 bis 6 ist dabei ganz besonders bevorzugt. Das mittlere Molgewicht (gemessen durch Osmometrie in verdünnten wässerigen Lösungen) liegt vorzugsweise bei 150 bis 800 und insbesondere im Bereich von 350 bis 650. Die oligomeren Anionen der modifizierten Silikate weisen vorzugsweise eine Teilchengröße im Bereich von 75 bis 100 nm auf.

Ein weiterer Gegenstand der vorliegenden Anmeldung betrifft wässerige Mittel, enthaltend modifizierte Silikate nach der obigen Beschreibung, wobei diese Mittel die modifizierten Silikate in Mengen (jeweils immer Aktivsubstanz und bezogen auf das Gesamtgewicht der Mittel) von 0,01 bis 90 Gew.-% enthalten können. Bevorzugt und ausgewählt sind dabei zum einen Mittel die die Silikate in Mengen von mehr als 10 bis 90 Gew.-%, vorzugsweise von 25 bis 80 Gew.-% und insbesondere von 35 bis 75 Gew.-% enthalten. Diese Mittel können aber auch mit Wasser verdünnt zum Einsatz kommen, z.B. als Additive für Wasch- und vorzugsweise Reinigungsmittel.
Wässerige Mittel, die die Silikate gemäß der vorliegenden Erfindung in Mengen von 0,1 bis 10 Gew.-% und insbesondere in Mengen von 0,5 bis 6 Gew.-% und insbesondere von 1 bis 4 gew.-% enthalten sind daher ebenfalls bevorzugt.

Die modifizierten Silikate gemäß der obigen Beschreibung können entweder allein, oder in Kombination mit Tensiden verwendet werden, um harte Oberflächen (Kunststoff, Keramik, Metall, Holz oder Glass) hydrophil auszurüsten und/oder diesen Oberflächen Glanz zu verleihen. Die hydrophile Ausrüstung führt z.B. zu einer Verringerung des Kontaktwinkels zwischen einem Wassertropfen und der benetzten Oberfläche. Diese so ausgerüsteten Oberflächen lassen dann aufgebrachtes Wasser schneller ablaufen, was im Ergebnis zu einer Verringerung von Ablagerungen (vorzugsweise Ca-Salze oder Tensidrückständen) auf den Oberflächen führt. Diese Eigenschaft ist gerade bei Geschirrspülmitteln gefragt, aber auch bei Bad- und Küchenreinigern mit Vorteil einzusetzen.

Als Tenside, die vorzugsweise zusammen mit den modifizierten Silikaten zum Einsatz kommen eigenen sich anionische, kationische, amphotere oder nichtionische Tenside. Die nichtionischen Tenside sind dabei bevorzugt.
Typische Beispiele für geeignete nichtionische Tenside sind Alkoxylate von Alkanolen, endgruppenverschlossene Alkoxylate von Alkanolen ohne freie OH-Gruppen, alkoxylierte Fettsäureniedrigalkylester, Aminoxide, Alkylphenolpolyglycolether, Fettsäurepolyglycolester, Fettsäureamidpolyglycolether, Fettaminpolyglycolether, alkoxylierte Triglyceride, Mischether bzw. Mischformale, Fettsäure-N-alkylglucamide, Proteinhydrolysate (insbesondere pflanzliche Produkte auf Weizenbasis), Polyolfettsäureester, Zuckerester, Sorbitanester, und Polysorbate. Sofern die nichtionischen Tenside Polyglycoletherketten enthalten, können diese eine konventionelle, vorzugsweise jedoch eine eingeengte Homologenverteilung aufweisen. Bevorzugt sind die weiteren nichtionische Tenside ausgewählt aus der Gruppe, die gebildet wird von Alkoxylaten von Alkanolen, insbesondere Fettalkoholpolyethylenglykol/polypropylenglykolether (FAEO/PO) bzw. Fettalkoholpolypropylenglykol/polyethylenglykolether (FAPO/EO), endgruppenverschlossene Alkoxylate von Alkanole, insbesondere endgruppenverschlossene Fettalkoholpolyethylenglykol/polypropylenglykolether bzw. endgruppenverschlossene Fettalkoholpolypropylenglykol/polyethylenglykolether, und Fettsäureniedrigalkylester und Aminoxiden. Weiterhin kann der Einsatz von Alkyl- und/oder Alkenyloligoglykoside bevorzugt sein.

Bevorzugte Substanzen für die erfindungsgemäße Verwendung sind nichtionische Tenside, ausgewählt aus den Klassen a) bis i):
Die Substanzen der Klasse a) sind ausgewählt ist aus Verbindungen der allgemeinen Formel (I)

R¹O[CH₂CH₂O]ₓCH₂CH(OM)R² (I)

in der R¹ für einen linearen oder verzweigten Alkyl- und/oder Alkenylrest mit 4 bis 22 Kohlenstoffatomen bedeutet, oder für einen Rest R²-CH(OH)CH₂ steht, wobei R² für einen linearen oder verzweigten Alkyl- und/oder Alkenylrest mit 8 bis 16 Kohlenstoffatomen, x für eine Zahl von 40 bis 80 steht, und M für ein Wasserstoffatom oder einen gesättigten Alkylrest mit 1 bis 18 Kohlenstoffatomen. Dabei handelt es sich um so genannte Hydroxymischether bzw. deren Derivate. Hydroxymischether (HME) folgen der breiten allgemeinen Formel R^{'}O[AO ]ₓCH₂CH(OM)R^{"}, in der R^{'} für einen linearen oder verzweigten Alkyl- und/oder Alkenylrest mit 4 bis 22 Kohlenstoffatomen, R^{"} für einen linearen oder verzweigten Alkyl- und/oder Alkenylrest mit 2 bis 22 Kohlenstoffatomen x für 10 bis 80 steht und AO einen Ethylenoxid-, Propylenoxid- oder Butylenoxid-Rest symbolisiert und M für ein Wasserstoffatom oder einen Alkyl- bzw. Alkenylrest stehen kann.
Solche Hydroxymischether sind literaturbekannt und werden beispielsweise in der deutschen Anmeldung DE 19738866 beschrieben. Sie werden beispielsweise hergestellt durch Umsetzung von 1,2-Epoxyalkanen (R''CHOCH₂), wobei R'' für einen Alkyl- und/oder Alkenylrest mit 2 bis 22, insbesondere 6 bis 16 Kohlenstoffatomen steht, mit alkoxylierten Alkoholen. Bevorzugt im Sinne der Erfindung werden solche Hydroxymischether, die sich von Alkoxylaten von einwertigen Alkoholen der Formel R'-OH mit 4 bis 18 Kohlenstoffatomen ableiten, wobei R^{'} für einen aliphatischen, gesättigten, geradkettigen oder verzweigten Alkylrest, insbesondere mit 6 bis 16 Kohlenstoffatomen, steht. Beispiele für geeignete geradkettige Alkohole sind Butanol-1, Capron-, Önanth-, Capryl-, Pelargon-, Caprinalkohol, Undecanol-1, Laurylalkohol, Tridecanol-1, Myristylalkohol, Pentadecanol-1, Palmitylakohol, Heptadecanol-1, Stearylalkohol, Nonadecanol-1, Arachidylalkohol, Heneicosanol-1, Behenylalkohol sowie deren technische Mischungen, wie sie bei der Hochdruckhydrierung von technischen Methylestern auf Basis von Fetten und Ölen anfallen. Beispiele für verzweigte Alkohole sind so genannte Oxoalkohole, die meist 2 bis 4 Methylgruppen als Verzweigungen tragen und nach dem Oxoprozess hergestellt werden und so genannte Guerbetalkohole, die in 2-Stellung mit einer Alkylgruppe verzweigt sind. Geeignete Guerbetalkohole sind 2-Ethylhexanol, 2-Butyloctanol, 2-Hexyldecanol und/oder 2-Octyldodecanol. Die Alkohole werden in Form ihrer Alkoxylate eingesetzt, die durch Umsetzung der Alkohole mit Ethylenoxid auf bekannte Weise hergestellt werden.
Daneben sind auch andere Hydroxymischether bekannt, nämlich solche die mehr als eine freie Hydroxylgruppe im Molekül aufweisen. Solche Verbindungen können beispielsweise hergestellt werden, indem man Diole, vorzugsweise Alkylenglykole und deren Derivate, vorzugsweise Polyethylenglykole, jeweils mit zwei Mol eines Alkylepoxids (R-CHOCH₂) pro Mol des Diols zur Reaktion bringt.

Die ebenfalls geeigneten Substanzen der Klasse b) sind ausgewählt ist aus der Gruppe der Verbindungen der Formel (II)

R³O[CH₂CH₂O]_{y}[CH₂CHCH₃O]_{z}CH₂CH(OH)R⁴ (II)

in der R³ für einen linearen oder verzweigten Alkyl- und/oder Alkenylrest mit 8 bis 22 Kohlenstoffatomen, R⁴ für einen linearen oder verzweigten Alkyl- und/oder Alkenylrest mit 8 bis 16 Kohlenstoffatomen, y für eine Zahl von 10 und 35 steht, z Null bedeutet oder eine Zahl von 1 bis 5, mit der Maßgabe, dass wenn R³ = R¹ und gleichzeitig R⁴ = R² ist, dass dann z mindestens 1 sein muss und.

Bei diesen Verbindungen handelt es sich ebenfalls um HME, allerdings haben diese eine andere Struktur als die HME der allgemeinen Formel (I). Die Verbindungen des Typs b) folgen der Formel (II)

R³O [CH₂CHCH₃O]_{z}[CH₂CH₂O]_{y}CH₂CH(OH)R⁴ (II)

in der R³ für einen linearen oder verzweigten Alkyl- und/oder Alkenylrest mit 8 bis 22 Kohlenstoffatomen, R⁴ für einen linearen oder verzweigten Alkyl- und/oder Alkenylrest mit 8 bis 16 Kohlenstoffatomen, y für eine Zahl von 10 und 35 steht, z Null bedeutet oder eine Zahl von 1 bis 5 sein muss. Es kann vorteilhaft sein dass, wenn R³ = R¹ und gleichzeitig R⁴ = R² solche Verbindungen der Formel b) ausgewählt werden in denen der Index z mindestens 1 ist. Besonders bevorzugte Verbindungen vom Typ b) sind beispielsweise solche bei denen in der Formel (II) der Index y für einen Zahl von 20 bis 30, vorzugsweise von 20 bis 25 steht. Weiterhin bevorzugt sind solche Verbindungen des Typs b) bei denen in der Formel (II) R³ einen Alkylrest mit 8 bis 12, vorzugsweise 8 bis 10 Kohlenstoffatomen repräsentiert, R⁴ für einen Alkylrest mit 10 bis 12, vorzugsweise mir 10 Kohlenstoffatomen bedeutet, y eine Zahl von 15 bis 35, vorzugsweise 20 bis 30 bedeutet und z eine Zahl von 1 bis 3, vorzugsweise 1 bedeutet.

Ebenfalls geeignet sind c) ethoxylierten Fettalkoholen der allgemeinen Formel (III)

R⁵-(OC₂H₄)_{z}-OH

in der R⁵ für lineare oder verzweigte Alkyl- und/oder Alkenylreste mit 8 bis 22 Kohlenstoffatomen steht und z eine Zahl von 1 bis 20 steht.
Bei diesen Verbindungen handelt es sich um an sich bekannte Fettalkoholethoxylate der allgemeinen Formel (III) R⁵-(OC₂H₄)_{z}-OH, in der R⁵ für lineare oder verzweigte Alkyl- und/oder Alkenylreste mit 8 bis 22 Kohlenstoffatomen steht und z eine Zahl von 1 bis 20 und vorzugsweise von 1 bis 15, und insbesondere von 1 bis 10 steht. Typische Beispiele sind die Addukte von durchschnittlich 1 bis 20 Mol an Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen, die z.B. bei der Hochdruckhydrierung von technischen Methylestern auf Basis von Fetten und Ölen oder Aldehyden aus der Roelen'schen Oxosynthese sowie als Monomerfraktion bei der Dimerisierung von ungesättigten Fettalkoholen anfallen. Bevorzugt sind Addukte von 10 bis 40 Mol Ethy-lenoxid an technische Fettalkohole mit 12 bis 18 Kohlenstoffatomen, wie beispielsweise Kokos-, Palm-, Palmkern- oder vorzugsweise Talgfettalkohol. Besonders bevorzugte Fettalkoholethoxylate basieren auf Talgalkohole, der mit 2 bis 10 und vorzugsweise 2 bis 5 Mol Ethylenoxid pro Mol Alkohol ethoxyliert sind.

Geeignet sind auch Substanzen der Gruppe d), die der Formel

R⁶CO-(OC₂H₄)ₘ-OR⁷

folgen, wobei R⁶ für einen Alkyl- und/oder Alkenylreste mit 7 bis 21 Kohlenstoffatomen und m für Zahlen von 11 bis 100 steht, und R⁷ ein Wasserstoffatom oder einen Rest CO-R⁶ bedeutet. Diese Verbindungen stellen Mono- und/oder vorzugsweise Diester des Glykols und insbesondere von Polyglykolen dar und sind ebenfalls bekannt und handelsüblich. Sie können mit der Formel R⁶CO-(OC₂H₄)ₘ-OR⁷, beschrieben werden, wobei R⁶ für einen Alkyl- und/oder Alkenylreste mit 7 bis 21 Kohlenstoffatomen und m für Zahlen von 11 bis 100 steht, und R⁷ ein Wasserstoffatom oder einen Rest CO-R⁶ bedeutet. Dabei sind symmetrische (R⁶ = R⁷) und unsymmetrische Verbindungen (R6 ≠ R7) mit umfasst. Vorzugsweise werden Verbindungen es Typs d) die auf Polyethylenglykolen mit Molgewichten zwischen 1000 und 10.000 und vorzugsweise von 1500 bis 6000 und insbesondere von 1500 bis 3000 basieren in den erfindungemäßen Mitteln verwendet. Besonders bevorzugt sind Diester-Verbindungen des Typs d). Herstellungsbedingt können neben den Verbindungen des Typs d) noch Polyglykole als Nebenprodukte enthalten sein.

Geeignet sind auch Verbindungen des Typs e), nämlich den Alkyl(oligo)glycoside der allgemeinen Formel R⁸O-[G]ₚ in der R⁸ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht.
Diese Verbindungen sind als Alky(oligo)glycoside ebenfalls bekannt. Alkyl- und Alkenyloligoglykoside stellen bekannte nichtionische Tenside dar, die der obigen Formel R⁸O-[G]ₚ folgen. Sie können nach den einschlägigen Verfahren der präparativen organischen Chemie erhalten werden. Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside. Die Indexzahl p in der allgemeinen Formel gibt den Oligomerisierungsgrad (DP), d. h. die Verteilung von Mono- und Oligoglykosiden an und steht für eine Zahl zwischen 1 und 10. Während p in einer gegebenen Verbindung stets ganzzahlig sein muss und hier vor allem die Werte p = 1 bis 6 annehmen kann, ist der Wert p für ein bestimmtes Alkyloligoglykosid eine analytisch ermittelte rechnerische Größe, die meistens eine gebrochene Zahl darstellt. Vorzugsweise werden Alkyl- und/oder Alkenyloligoglykoside mit einem mittleren Oligomerisierungsgrad p von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt. Der Alkyl- bzw. Alkenylrest R⁸ kann sich von primären Alkoholen mit 4 bis 11, vorzugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden. Bevorzugt sind Alkyloligoglucoside der Kettenlänge C₈-C₁₀ (DP = 1 bis 3), die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole (DP = 1 bis 3). Der Alkyl- bzw. Alkenylrest R⁸ kann sich ferner auch von primären Alkoholen mit 12 bis 22, vorzugsweise 12 bis 14 Kohlenstoffatomen ableiten. Typische Beispiele sind Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol, Brassidylalkohol sowie deren technische Gemische, die wie oben beschrieben erhalten werden können. Bevorzugt sind Alkyloligoglucoside auf Basis von gehärtetem C_{12/14}-Kokosalkohol mit einem DP von 1 bis 3.

Geeignet sind auch Verbindungen des Typs f), der Betaine. Betaine stellen bekannte Tenside dar, die überwiegend durch Carboxyalkylierung, vorzugsweise Carboxymethylierung von aminischen Verbindungen hergestellt werden. Vorzugsweise werden die Ausgangsstoffe mit Halogencarbonsäuren oder deren Salzen, insbesondere mit Natriumchloracetat kondensiert, wobei pro Mol Betain ein Mol Salz gebildet wird. Ferner ist auch die Anlagerung von ungesättigten Carbonsäuren, wie beispielsweise Acrylsäure möglich. Beispiele für geeignete Betaine stellen die Carboxyalkylierungsprodukte von sekundären und insbesondere tertiären Aminen dar, die der Formel (1) folgen 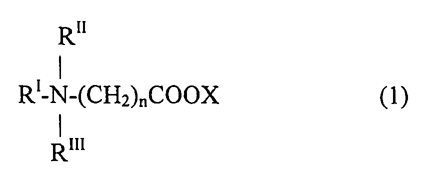 in der R^{I} für Alkyl- und/oder Alkenylreste mit 6 bis 22 Kohlenstoffatomen, R^{II} für Wasserstoff oder Alkylreste mit 1 bis 4 Kohlenstoffatomen, R^{III} für Alkylreste mit 1 bis 4 Kohlenstoffatomen, n für Zahlen von 1 bis 6 und X für ein Alkali- und/oder Erdalkalimetall oder Ammonium steht. Typische Beispiele sind die Carboxymethylierungsprodukte von Hexylmethylamin, Hexyldimethylamin, Octyldimethylamin, Decyldimethylamin, Dodecylmethylamin, Dodecyldimethylamin, Dodecylethylmethylamin, C_{12/14}-Kokosalkyldimethylamin, Myristyldimethylamin, Cetyldimethylamin, Stearyldimethylamin, Stearylethylmethylamin, Oleyldimethylamin, C_{16/18}-Talgalkyldimethylamin sowie deren technische Gemische.

Weiterhin kommen auch Carboxyalkylierungsprodukte von Amidoaminen in Betracht, die der Formel (2) folgen, 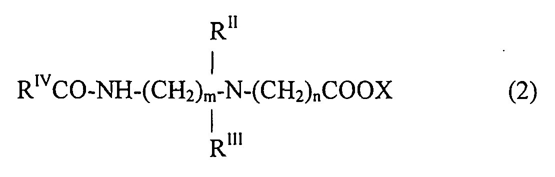 in der R^{IV} CO für einen aliphatischen Acylrest mit 6 bis 22 Kohlenstoffatomen und 0 oder 1 bis 3 Doppelbindungen, m für Zahlen von 1 bis 3 steht und R^{II}, R^{III}, n und X die oben angegebenen Bedeutungen haben. Typische Beispiele sind Umsetzungsprodukte von Fettsäuren mit 6 bis 22 Kohlenstoffatomen, namentlich Capronsäure, Caprylsäure, Caprinsäure, Laurinsäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Gemische, mit N,N-Dimethylaminoethylamin, N,N-Dimethylaminopropylamin, N,N-Diethylaminoethylamin und N,N-Diethylaminopropylamin, die mit Natriumchloracetat kondensiert werden. Bevorzugt ist der Einsatz eines Kondensationsproduktes von C_{8/18}-Kokosfettsäure-N,N-dimethylaminopropylamid mit Natriumchloracetat.

Weiterhin kommen als geeignete Ausgangsstoffe für die im Sinne der Erfindung einzusetzenden Betaine auch Imidazoline in Betracht, die der Formel (3) folgen, 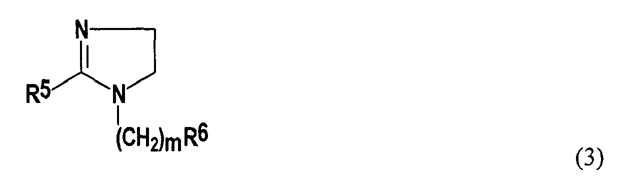 in der R^{V} für einen Alkylrest mit 5 bis 21 Kohlenstoffatomen, R⁶ für eine Hydroxylgruppe, einen OCOR^{V}- oder NHCOR^{V}-Rest und m für 2 oder 3 steht. Auch bei diesen Substanzen handelt es sich um bekannte Stoffe, die beispielsweise durch cyclisierende Kondensation von 1 oder 2 Mol Fettsäure mit mehrwertigen Aminen, wie beispielsweise Aminoethylethanolamin (AEEA) oder Diethylentriamin erhalten werden können. Die entsprechenden Carboxyalkylierungsprodukte stellen Gemische unterschiedlicher offenkettiger Betaine dar. Typische Beispiele sind Kondensationsprodukte der oben genannten Fettsäuren mit AEEA, vorzugsweise Imidazoline auf Basis von Laurinsäure oder wiederum C_{12/14}-Kokosfettsäure, die anschließend mit Natriumchloracetat betainisiert werden.

Als weitere geeignete Verbindungsklasse sind g) Verbindungen der allgemeinen Formel (III) geeignet, 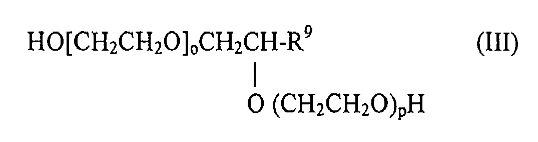 in der R⁹ für einen linearen oder verzweigten Alkyl- und/oder Alkenylrest mit 4 bis 22 Kohlenstoffatomen und o für eine Zahl von 1 bis 20 und der Index p für Null oder Zahlen von 1 bis 20 steht. Diese ebenfalls bekannten, nichtionischen Verbindungen werden beispielsweise hergestellt, indem man Alkyl-Epoxide mit Ethylenglykol und anschließend mit weiterem Ethylenoxid umsetzt.

Es folgen h) Verbindungen der allgemeinen Formel (IV)

R¹⁰CH(OR¹¹)CH₂-OR¹¹ (IV)

in der R¹⁰ für einen gesättigten oder ungesättigten, verzweigten oder unverzweigten Alkyl- oder Alkenylrest mit 8 bis 16 Kohlenstoffatomen steht, und R¹¹ jeweils unabhängig voneinander einen Rest (CH₂CH₂O)ᵣCH₂CH(OH)R¹² symbolisieren, wobei r in jedem Rest R¹¹ unabhängig für Null oder eine Zahl von 1 bis 50 steht und R¹² einen gesättigten oder ungesättigten, verzweigten oder unverzweigten Alkyl- oder Alkenylrest mit 8 bis 16 Kohlenstoffatomen steht.

Schließlich sind auch i) Verbindungen der allgemeinen Formel (V) geeignet,

NR¹³₃ (V)

wobei R¹³ unabhängig voneinander für einen Rest (CH₂CH₂O)ₛ-CH₂CH(OH)R¹⁴ oder einen Alkylrest mit 8 bis 16 Kohlenstoffatomen steht und s für jeden einzelnen Rest R¹³ unabhängig Null bedeutet, oder eine Zahl von 1 bis 50.

Die Mittel, enthaltend die modifizierten Silikate und die Tenside (letztere in Mengen von vorzugsweise 1 bis 30 Gew.-%, bezogen auf das Gesamte Mittel), werden allein, oder als Compound z.B. mit anderen Tensiden oder Füllstoffen bzw. sonstigen geeigneten Additiven vorzugsweise in Reinigungsmitteln verwendet.

### Beispiele

### Herstellung der erfindungsgemäßen Silikatlösungen:

### Beispiel 1:

81 Teile einer wässerigen Kaliumsilikatlösung (molares Verhältnis SiO₂/K₂O 3,15; Feststoffanteil: 41 Gew.-%) wurde mit 12 Teilen Wasser vermischt und dazu anschließend bei Raumtemperatur tropfenweise 7 Teile 3-Glycidyloxypropyltrimethoxysilan zugegeben. Nach Ende der Zugabe wurde noch 15 Minuten weiter bei Raumtemperatur gerührt, bis die erfindungsgemäße klare Lösung erhalten wurde.

### Beispiel 2:

67 Teile einer wässerigen Kaliumsilikatlösung (molares Verhältnis SiO₂/K₂O 2,9; Feststoffanteil: 42 Gew.-%) wurde mit 27 Teilen Wasser vermischt und dazu anschließend bei Raumtemperatur tropfenweise 1 Teil 3-Aminopropyltriethoxysilan zugegeben und danach auf 60 °C erwärmt. Anschließend wurden 6 Teile 3-Glycidyloxypropyltrimethoxysilan zugegeben. Nach Ende der Zugabe wurde noch 50 Minuten weiter gerührt, bis die erfindungsgemäße klare Lösung erhalten wurde.

### Beispiel 3:

77 Teile einer wässerigen Natriumsilikatlösung (molares Verhältnis SiO₂/Na₂O 3,0; Feststoffanteil: 29 Gew.-%) wurde mit 18 Teilen Wasser vermischt und dazu anschließend bei Raumtemperatur tropfenweise 5 Teile 3-Glycidyloxypropyltrimethoxysilan zugegeben. Nach Ende der Zugabe wurde noch 15 Minuten weiter bei Raumtemperatur gerührt, bis die erfindungsgemäße klare Lösung erhalten wurde.

### Beispiel 4:

70 Teile einer wässerigen Kaliumsilikatlösung (molares Verhältnis SiO₂/K₂O 3,14; Feststoffanteil: 35 Gew.-%) wurde mit 24 Teilen Wasser vermischt und dazu anschließend bei Raumtemperatur tropfenweise 7 Teile 3-Aminopropyltriethoxysilan. Nach Ende der Zugabe wurde noch 15 Minuten weiter bei Raumtemperatur gerührt, bis die erfindungsgemäße klare Lösung erhalten wurde.

### Beispiel 5:

81 Teile einer wässerigen Kaliumsilikatlösung (molares Verhältnis SiO₂/K₂O 3,15; Feststoffanteil: 41 Gew.-%) wurde mit 12 Teilen Wasser vermischt und dazu anschließend bei Raumtemperatur tropfenweise 7 Teile prim. Aminopropylsilanol *(Silquest*^{®}*A1106, Fa. GEAdvanced Materials*) zugegeben. Nach Ende der Zugabe wurde noch 15 Minuten weiter bei Raumtemperatur gerührt, bis die erfindungsgemäße klare Lösung erhalten wurde.

### Anwendungstechnische Untersuchungen:

### Kontaktwinkeltest

Die Kontaktwinkel wurden auf verschiedenen Oberflächen (Keramik, Glas, Edelstahl) gemessen, indem eine Testformulierung aufgetragen und verwischt wurde. Nach dem Eintrocknen wurde mit voll entsalztem (VE) Wasser gespült und trocknen gelassen. Auf den so präparierten Oberflächen wurde der Kontaktwinkel mit VE-Wasser gemessen (Apparatur: Kontaktwinkelmessgerät der Fa. Dataphysics, Filderstadt, Modell OCAH-200). Gemessen wurde mit einer Lösung aus 1% eines Fettalkoholethoxylats (Lutensol^{®} ON 80, Fa. BASF) und 0,1% (Aktivsubstanz) des Additivs aus Beispiel 1 (E1). Zum Vergleich wurde eine Lösung mit dem kommerziellen Produkt Bindzil^{®} CC30 (Silikasol, Fa. Akzo; V1), sowie den unbehandelten Oberflächen gemessen:

**Tabelle 1**

| **Oberfläche** | **E1** | **V1** | **unbehandelt** |
|---|---|---|---|
| Keramik | 18,9 | 22,5 | 27,0 |
| Glas | 33,1 | 34,4 | 38,3 |
| Edelstahl | 24,6 | 46,2 | 40,1 |
| PVC | 69,0 | 75,2 | 77,8 |
| SAN | 73,2 | 71,8 | 78,5 |
| Polypropylen | 92,9 | 93,3 | 90,8 |

| | | | |
|---|---|---|---|
| ¹) Styrol-acrylnitril | | | |

### Glanz- und Ablauftest auf Keramik:

Zunächst wurde eine gereinigte, unbehandelte Keramikkachel mit einem Reflektometer auf Glanz vermessen. Eine Testformulierung (wie oben beschrieben Mischung aus dem Additiv plus Lutensol^{®} ON 80) wurde auf einer Keramikplatte, wie oben beschrieben, aufgetragen, verwischt und trocknen gelassen. Die resultierende Oberfläche wurde wiederum auf Glanz geprüft und mit dem Wert der ursprünglichen, sauberen Oberfläche vergleichen. Aus den Werten wurde der Glanzerhalt in Prozent berechnet. Der Glanz wurde mit dem Messgerät Micro-TRI-Gloss der Firma BYK Gardner bei einem Winkel von 20° gemessen.
Zum Vergleich wurde nur das Lutensol^{®} 80 ON sowie ein handelsübliches Kieselsol (30 %ig) gemessen. In der Tabelle 2 finden sich die Messergebnisse.

**Tabelle 2**

| Beispiel | Glanzerhalt [%] | Aussehen Glanz | Ablaufverhalten |
|---|---|---|---|
| 1 | 92,5 | glänzende Oberfläche, wenige Wischstreifen | vollständiger Film, Film bleibt stehen, flacher Filmrand, Regenbogen-Effekt, sehr langsamer Ablauf, nach Ablauf äußerst geringe Ablagerung auf der Kachel |
| 2 | 90,0 | glänzende Oberfläche, wenige Wischstreifen | vollständiger Film, Film bleibt stehen, flacher Filmrand, Regenbogen-Effekt, nach Ablauf kaum erkennbarer Rückstand auf der Kachel |
| 3 | 92,4 | glänzende Oberfläche, wenige Wischstreifen | vollständiger Film, Film bleibt stehen, flacher Filmrand, sehr langsamer Ablauf, Regenbogen-Effekt, nach Ablauf Ablagerung auf der Kachel, |
| 4 | 92,3 | glänzende Oberfläche, matte Wischstreifen | vollständiger Film, Film bleibt stehen, flacher Filmrand, Regenbogen-Effekt, nach Ablauf kaum erkennbarer Rückstand auf der Kachel |
| 5 | 90,9 | glänzende Oberfläche, matte Wischstreifen | vollständiger Film, Film bleibt stehen, flacher Filmrand, geringer Regenbogen-Effekt, nach Ablauf Rückstand auf der Kachel |
| Lutensol 80 ON | 79,0 | matte Oberfläche mit Wischstreifen | Film reißt auf, nach Ablauf Rückstände auf der Kachel |
| Kewasil | 85,6 | glänzende Oberfläche, matte Wischstreifen, Tropfpunkte schwach erkennbar | vollständiger Film, Film bleibt stehen, flacher Filmrand, Regenbogen-Effekt, Film reißt zunächst am oberen und unteren Filmrand gering auf, Film reißt dann weiter auf |

In einem weiteren Test wurden handelsübliche Reinigerformulierungen (ein Badreiniger, ein Allzweckreiniger und ein Entfettungsmittel mit Additiven versehen und ein Glanztest durchgeführt. Als Additive kamen zum Einsatz:
E1: modifizierte Silikate aus Beispiel 1, in Mengen von 0,1 Gew.-% AS
V1: das Vergleichsprodukt Bindizil^{®} CC30
V2: Kaliwasserglas Modul 3,14 (0,1 Gew.-%)
Die Ergebnisse des Glanztests finden sich in der Tabelle 3:

**Tabelle 3**

| Beispiel | Glanzerhalt [%] Badreiniger | Glanzerhalt [%] Allzweckreiniger | Glanzerhalt [%] Entfettungsmittel |
|---|---|---|---|
| E1 | 90 | 66 | 79 |
| V1 | 85 | 60 | 77 |
| V2 | 80 | 62 | 71 |

## Patentansprüche

1. Modifizierte Silikate, welche **dadurch** erhältlich sind, dass man
(a) eine wässerige Lösung von Silikaten, die der allgemeinen Formel M₂O • nSiO₂ folgen vorlegt, wobei M für ein Kation aus der Gruppe Li⁺, Na⁺, K⁺, NY₄⁺ wobei Y ein H-Atome und/oder einen Alkyl- oder Alkenylreste mit 1 bis 22 C-Atomen bedeutet, mit
(b) mindestens einem Silan der allgemeinen Formel (i)
R-(CH₂)ₙ-Si-(X)₃ (i)
in der X jeweils unabhängig voneinander für einen Rest CH₃, OCH₃, OC₂H₅, OC₃H₇, OCOCH₃ oder Cl steht und R für einen gesättigten oder ungesättigten, linearen oder verzweigten bzw. ringförmigen Rest mit mindestens einem O und/oder N-Atom und mindestens 2 C-Atomen steht, und n eine Zahl zwischen 1 und 3 bedeutet,
bei Temperaturen von 5 bis 100 °C zur Reaktion bringt

2. Silikate nach Anspruch 1, **dadurch gekennzeichnet, dass** das Reaktionsprodukt ein Gewichtsverhältnis des SiO₂ aus (a) zum SiO₂ aus (b) im Bereich von 30 bis 2 aufweist.

3. Silikate nach mindestens einem der Ansprüche 1 bis 2, **dadurch gekennzeichnet, dass** als Komponente (a) vorzugsweise eine wässerige Lösung mit einem Feststoffgehalt von 15 bis 50 Gew.-% und vorzugsweise 30 bis 40 Gew.-% anorganischem Feststoffanteil eingesetzt wird.

4. Silikate nach mindestens einem der Ansprüche 1 bis 2, **dadurch gekennzeichnet, dass** das Silan (b) ausgewählt ist aus der Gruppe der Trialkoxysilane und vorzugsweise aus der Gruppe 3-Aminopropyltriethoxysilan, 3-Glycidyloxypropyltrimethoxy- oder ethoxysilan.

5. Wässeriges Mittel enthaltend modifizierte Silikate nach mindestens einem der Ansprüche 1 bis 4, **dadurch gekennzeichnet, dass** das Mittel die modifizierten Silikate in Mengen von mehr als 10 bis 90 Gew.-% (bezogen auf Aktivsubstanz), vorzugsweise von 25 bis 80 Gew.-% und insbesondere von 35 bis 75 Gew.-% (bezogen auf das Gesamtgewicht des Mittels) enthält.

6. Wässeriges Mittel enthaltend modifizierte Silikate nach mindestens einem der Ansprüche 1 bis 4, **dadurch gekennzeichnet, dass** das Mittel die modifizierten Silikate in Mengen von 0,1 bis 10 Gew.-% (bezogen auf Aktivsubstanz), und insbesondere in Mengen von 0,5 bis 6 Gew.-% und insbesondere von 1 bis 4 Gew.-% (bezogen auf das Gesamtgewicht des Mittels) enthält.

7. Mittel nach mindestens einem der Ansprüche 5 oder 6, **dadurch gekennzeichnet, dass** es zusätzlich noch Tenside und vorzugsweise nichtionische Tenside enthält.

8. Verwendung von modifizierten Silikaten nach mindestens einem der Ansprüche 1 bis 4 oder den Mitteln nach den Ansprüchen 5 bis 7, für die Hydrophilisierung von Oberflächen, insbesondere Oberflächen aus Kunststoff, Keramik, Metall, Holz oder Glass.
